# EUROPEAN PATENT APPLICATION

(11) **EP 1 189 373 A1**
(43) Date of publication of application: **20.03.2002**
(21) Application number: 01917643.7
(22) Date of filing: 29.03.2001
(51) Int. Cl.: H04H 1/00, H04N 7/08, G06F 17/00

(54) **PROGRAM CONTROL INFORMATION CREATING APPARATUS**

(30) Priority: 30.03.2000 JP 2000093158
(71) Applicant: MATSUSHITA ELECTRIC INDUSTRIAL CO., LTD, Kadoma-shi, Osaka 571-0000 (JP)
(72) Inventor: HAMADA, Asako, Nerima-ku, Tokyo 177-0041 (JP); NAKAGAWA, Aki, Fujisawa-shi, Kanagawa 251-0047 (JP); YOSHIKAWA, Masaaki, Shinjuku-ku, Tokyo 160-0023 (JP); NAKADA, Toru, Itabashi-ku, Tokyo 174-0074 (JP); FUJITA, Mitsuko, Meguro-ku, Tokyo 153-0061 (JP)
(74) Representative: Casalonga, Axel
(86) International application number: JP0102683
(87) International publication number: WO0176111

(57) **Abstract**

A program control information generator for realizing functions of high-speed generation and transmission of program control information and of an automatic adjustment of program information without interrupting the generation. In a broadcasting station system for broadcasting program control information, the program control information generator comprises an input section 101, a schedule adjustment section 102, a band adjustment section 103, a storage section 104, a difference detecting section 105, and a section generating section 106 in generating section data from program information and program schedule information inputted from a program organization apparatus, by which it is possible to provide a program control information generator which realizes a high-speed program control information generation and an automatic schedule adjustment method with a schedule overlap or an effective adjustment method of program control information in which a band over may occur.

## Description

### TECHNICAL FIELD

The present invention relates to an apparatus for generating program control information multiplexed and transmitted in synchronization with information for use in composing a program such as images and sounds.

### BACKGROUND ART

In digital broadcasting, a broadcasting station sends out not only images, sounds, and data, but also program control information for use in controlling the above information using a receiver when broadcasting a program. The program control information includes information pointing to information forming the program such as images and sounds as well as guide information for the program and therefore it need be sent out in synchronization with the corresponding program. As a program control information generator for generating the program control information, there is "a control information generator for a broadcasting system" disclosed in Japanese Unexamined Patent Publication No. 09-354015.

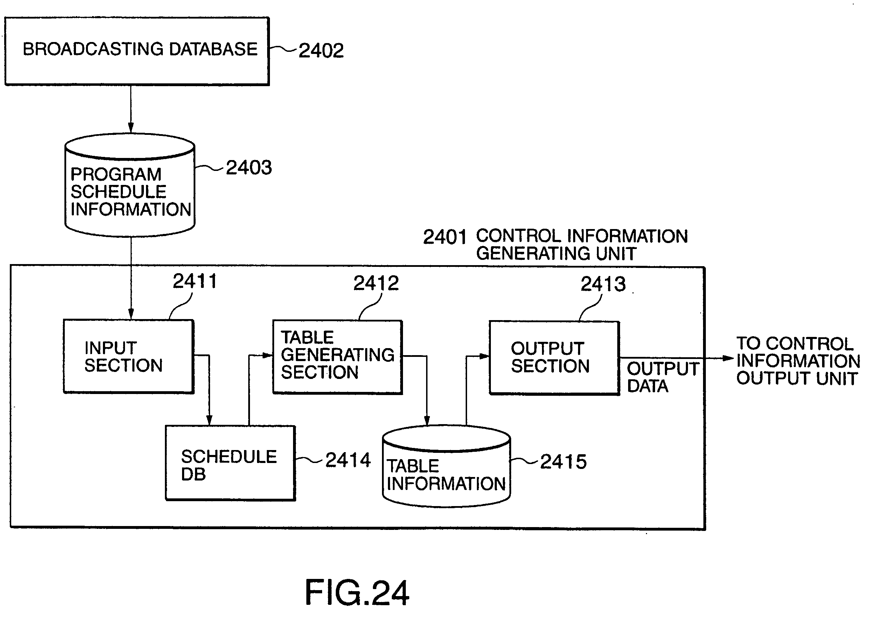

Its configuration diagram is shown in Fig. 24. In a control information generating unit 2401, an input section 2411 obtains new changed information with referencing program schedule information 2403 and generates a schedule DB 2414 at receiving new program schedule information from a broadcasting database 2402 and then transfers the control to a table generating section 2412. The table generating section 2412 generates table information on the basis of the schedule DB 2414. When the table information is generated, an output section 2413 notifies a control information output unit of a completion of a new data generation.

In this configuration, the input section 2411 detects a change by periodically checking the program schedule information 2403 for any change and performs processing of detecting a difference in the change within a range of transmission every time. If a change occurs, the table generating section 2412 checks the control information to be transmitted for sectioning and then generates and transmits the table information to the output section 2413. The reason why this configuration is applied is that a program schedule is determined several weeks to several months earlier in an operational assumption and broadcasting is performed based on this schedule, thus causing almost no urgent program change. In addition, there is only one broadcasting database and therefore there is only one apparatus for inputting program control information into the control information generating unit.

The current analog broadcasting is to shift to digital broadcasting in the broadcasting operation, beginning with a shift to BS digital broadcasting started on December in 2000. This causes urgent program changes in the digital broadcasting such as an extension of a program operated in the current analog broadcasting or an insertion of an emergency news program. Accordingly, the corresponding program control information is required to be generated and transmitted in synchronization with an urgent program change also in the program control information generator. Additionally, in the BS digital broadcasting, there are plurality of broadcasting forms such as TV, radio, and data broadcasts and a program is organized and operated independently in each. Therefore, program information is inputted from a plurality of program organization apparatuses (broadcasting database) to a program control information generator. This may cause an input of simultaneous or continuous program information change requests to the program control information generator.

Additionally, a processing unit of a program organization or an existence of a plurality of editing terminals may cause a schedule overlap outside the editing range.

In a band adjustment, if a band over occurs, conventionally there has been used a method of adjusting a period for a band adjustment. In this method, however, updated information was not immediately reflected on the receiver or it took a long time for receiving. In the BS digital broadcasting, there is such a problem that a period adjustment is preferably avoided for information required to be received quickly by a receiver such as a change of program information during broadcasting.

In addition, conventionally whether the transmitted data (section data) is appropriate information is checked at sectioning about program information inputted from a program organization apparatus. Therefore, if only a registration process is performed in the program control information generator, whether the inputted program information is transmittable data cannot be determined immediately after the input, thereby causing problems such that it takes a long time to obtain a result and that the program organization apparatus is forced to perform a modification process immediately before transmitting program control information.

These problems are hard to occur in the conventional digital broadcasting. In case of its occurrence, it has only a little effect. In the new digital broadcasting, however, the broadcasting operation differs from the conventional one, thereby causing problems the conventional system cannot cope with and requiring their corresponding functional expansion.

### DISCLOSURE OF THE INVENTION

In view of the above problems, it is an object of the present invention to provide a program control information generator for realizing a schedule automatic adjustment method by means of a high-speed program control information generation process and schedule overlap or a more effective adjustment method of program control information causing a band over.

To achieve this object, in accordance with an aspect of the present invention, there is provided a program control information generator for a broadcasting station system for generating and transmitting program control information from program information and schedule information, characterized by an input section for accepting inputs of the program information or the schedule information from a program organization apparatus, a band adjustment section for adjusting a program control information amount with a band over, and a storage section for storing the program information. This makes it possible to check the program control information before generating a section and to reduce a time for generating the section.

According to one aspect of the invention, the program control information generator is provided with a schedule adjustment section capable of setting a plurality of adjustment methods. This makes it possible to change an adjustment method optionally, thereby facilitating a countermeasure for an operational change.

According to one aspect of the invention, in the program control information generator, the schedule adjustment section adjusts a schedule by preferentially setting program information for the day or the next day to an adjustment method. With this if there is a schedule overlap between an already registered program and a new registered program, a schedule adjustment conforming to the setting is performed without interrupting the generation due to an error occurrence, by which the program control information can be generated and transmitted continuously.

According to one aspect of the invention, in the program control information generator, the schedule adjustment section adjusts a schedule by preferentially setting an earlier registered program or a later registered program. With this, if there is a schedule overlap between an already registered program and a new registered program, a schedule adjustment conforming to the setting is performed without interrupting the generation due to an error occurrence, by which program control information can be generated and transmitted continuously.

According to one aspect of the invention, in the program control information generator, the schedule adjustment section can resume a pre-adjustment schedule when it has changed schedule information preceding or following a schedule adjusted once. This enables a schedule recovery in a small number of steps in the program adjusted once.

According to one aspect of the invention, in the program control information generator, the schedule adjustment section can previously set priorities to a plurality of adjustment methods. This facilitates a schedule adjustment between programs once submitted to a schedule adjustment.

According to one aspect of the invention, in the program control information generator, the storage section retains original schedule information inputted from the program organization apparatus and schedule information after the schedule adjustment. This enables the schedule adjustment in any case.

According to one aspect of the invention, in the program control information generator, the storage section retains program information erased on the schedule as a result of the schedule adjustment made by the schedule adjustment section. With this, the program information erased on the program schedule can be recovered to the program schedule by re-executing a schedule adjustment.

According to one aspect of the invention, in the program control information generator, the input section checks the program information completely at an input, having an error detecting function, and determines a timing for generating and transmitting section data from the program information. This prevents an interruption of broadcasting that may be caused by an error occurrence at generating a section when a time lag may be caused by an input of the program information.

According to one aspect of the invention, in the program control information generator, if section data to be transmitted exceeds the transmission band, the band adjustment section cuts program information so as to fit into the band. This enables the program control information to fit into the band without a period adjustment.

According to one aspect of the invention, in the program control information generator, the band adjustment section is capable of changing an adjustment method by settings at the band adjustment. This enables an optional change of the adjustment method, thereby facilitating a countermeasure for an operational change.

In accordance with another aspect of the present invention, there is provided a program control information generator for a broadcasting station system for generating and transmitting program control information from program information and schedule information, characterized by a difference detecting section for detecting and generating section data including only a difference from the previous generated section at a section generation when section data is generated from program information and program schedule information inputted from a program organization apparatus. This enables a high-speed section generating process.

According to one aspect of the invention, the program control information generator for the broadcasting station system has a storage section for storing the program information and a section generating section for sectioning by acquiring differential data from the storage section. This enables a registration process of the inputted program control information and a high-speed section generating process.

In accordance with still another aspect of the present invention, there is provided a program control information generator for a broadcasting station system for generating and transmitting program control information from program information and schedule information, characterized by a generation management section for collectively generating and outputting an information group which has been inputted in a plurality of pieces by the plural number of times when section data is generated from the program information and program schedule information inputted from a program organization apparatus.

This enables speedup of the entire apparatus by the minimum section generating process.

According to one aspect of the invention, the program control information generator for the broadcasting station system comprises an input section for accepting inputs of the program information or the schedule information from the program organization apparatus and a section generating section for sectioning in response to an instruction of a section generation from the generation management section. This enables speedup of the entire apparatus by the minimum section generating process.

According to one aspect of the invention, in the program control information generator, the generation management section decides a priority order for the inputted information group and determines a generation or output order according to the priority order. This enables an earlier start of the section generation, by which a change of program control information of urgency can be reflected more quickly.

### BRIEF DESCRIPTION OF THE DRAWINGS

The above objects and features will be apparent to those skilled in the art from the description of a preferred embodiment of the invention which follows by referring to the following drawings.

Fig. 1 is a block diagram showing a configuration of a first embodiment of a program control information generator according to the present invention;

Fig. 2 is an explanatory diagram showing schedule adjustment section retaining information according to a first embodiment of the present invention;

Fig. 3 is an explanatory diagram showing schedule information at registering a change of program information according to the first embodiment of the present invention;

Fig. 4 is an explanatory diagram showing an adjustment schedule at registering a change of the program information according to the first embodiment of the present invention;

Fig. 5 is an explanatory diagram showing schedule information at registering a change of the program information according to the first embodiment of the present invention;

Fig. 6 is an explanatory diagram showing schedule information after an adjustment according to the first embodiment of the present invention;

Fig. 7 is an explanatory diagram showing the adjustment schedule at registering a change of the program information according to the first embodiment of the present invention;

Fig. 8 is an explanatory diagram showing the schedule information according to the first embodiment of the present invention;

Fig. 9 is an explanatory diagram showing the schedule information in a change process at registering a change of the program information according to the first embodiment of the present invention;

Fig. 10 is an explanatory diagram showing the adjustment schedule at registering a change of the program information according to the first embodiment of the present invention;

Fig. 11 is an explanatory diagram showing a calculation image of an all-station sch-EIT information amount according to the first embodiment of the present invention;

Fig. 12 is an explanatory diagram showing an all-station sch-EIT information cutting method according to the first embodiment of the present invention;

Fig. 13 is an explanatory diagram showing an each station sch-EIT information cutting method according to the first embodiment of the present invention;

Fig. 14 is an explanatory diagram showing retaining information of a program information DB according to the first embodiment of the present invention;

Fig. 15 is an explanatory diagram showing a condition of a registration change according to the first embodiment of the present invention;

Fig. 16 is an explanatory diagram showing segment information according to the first embodiment of the present invention;

Fig. 17 is an explanatory diagram showing a section data generation list according to the first embodiment of the present invention;

Fig. 18 is a difference detection flow diagram according to the first embodiment of the present invention;

Fig. 19 is a block diagram showing a configuration according to the first embodiment of a program control information generator of the present invention;

Fig. 20 is an explanatory diagram showing a merging method 1 according to a second embodiment of the present invention;

Fig. 21 is an explanatory diagram showing a merging method 2 according to the second embodiment of the present invention;

Fig. 22 is an explanatory diagram showing a priority processing method according to a third embodiment of the present invention;

Fig. 23 is a block diagram showing a configuration according to the third embodiment of the program control information generator of the present invention; and

Fig. 24 is a block diagram showing a configuration of a conventional program control information generator.

### MODE FOR CARRYING OUT THE INVENTION

### (First Embodiment)

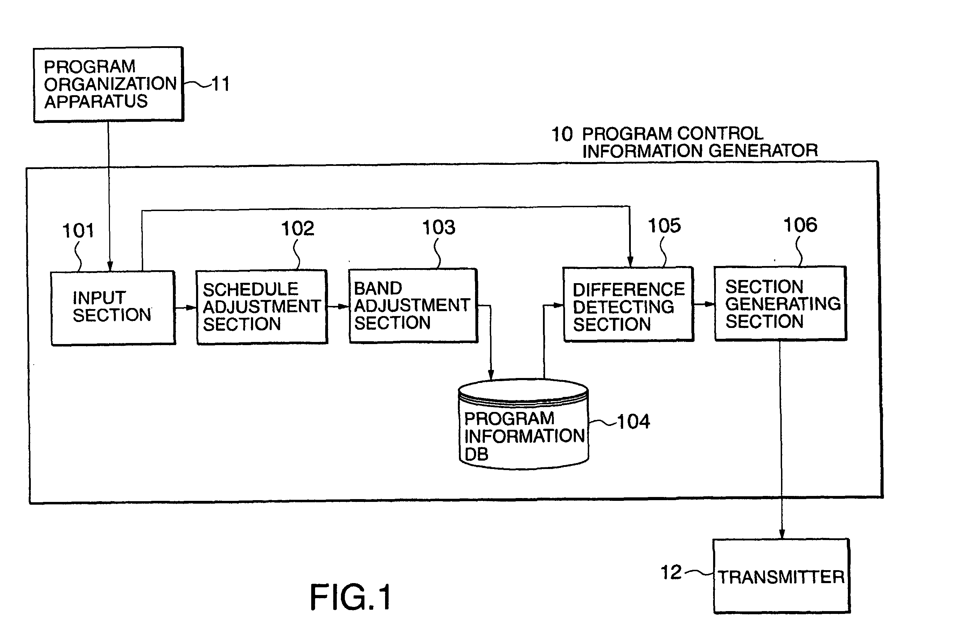

First, a first embodiment of a program control information generator according to the present invention will be described below. Referring to Fig. 1, there is shown a block diagram of a configuration according to the first embodiment of the program control information generator of the present invention.

In Fig. 1, the program control information generator 10 has an input section 101 with functions of receiving program information and schedule information necessary for generating section data from a program organization apparatus 11 and outputting the above received information to a schedule adjustment section 102.

The schedule adjustment section 102 adjusts a schedule so as not to cause a schedule overlap on the basis of the schedule information received from the input section 101 and then shifts the control to a band adjustment section 103 after the adjustment. When receiving a schedule adjustment completion command from the schedule adjustment section 102, the band adjustment section 103 performs calculation to confirm whether section data (program control information) generated from the program information is within a range of a transmission band and in case of an occurrence of a band over it cuts the program control information and registers the program information and the schedule information to a program information DB 104.

The program information DB 104 manages entities of the schedule information or the program information received from the band adjustment section 103 by using a database. When receiving an instruction of a section generation from the input section, a difference detecting section 105 detects a difference from the previous generated section data and instructs a section generating section 106 to generate differential data. The section generating section 106 generates section data instructed by the section 105 and then outputs it to a transmitting apparatus 12.

The program control information generator configured as set forth in the above will be described in its operation.

When receiving an input of the program information or the schedule information from the program organization apparatus 11, the input section 101 of the program control information generator 10 confirms whether the program information contains indispensable information. In addition, the program information is a group of data for each service and each broadcasting date and the input section 101 checks basic data to confirm whether a group of the program information is within a broadcasting time and whether there is no overlap of a group of the program schedule. This enables the program information to be prevented from causing an error which may occur due to a simple operation error in the broadcasting program organization apparatus 10 immediately after an input of the program information.

The program information is passed to the schedule adjustment section 102 after it is checked by the input section 101. The schedule adjustment section 102 checks that there is no overlap in the schedule information included in the program information. It is because a program schedule overlap may occur after merging with previously registered program information even if there is no overlap of a program information group checked by the input section 101. If a schedule overlap occurs, the schedule adjustment section 102 adjusts schedule information on the basis of a preset schedule adjustment method.

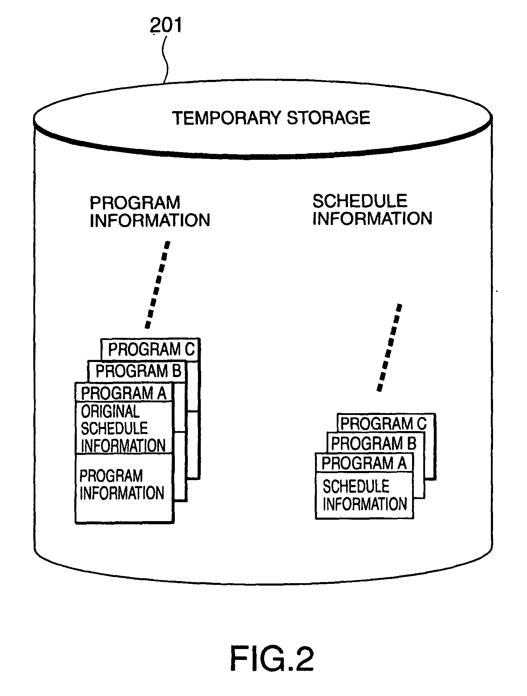

The schedule adjustment section 102 fetches out schedule information required for the schedule adjustment from the program information DB section 104 before adjustment. Referring to Fig. 2, there are shown original schedule information retained in the program information DB section 104 and conditions of the schedule information. The program information DB section 104 retains the schedule information inputted from the program organization apparatus as the original schedule information and also contains schedule information separately from it. At 201, it is assumed that the original schedule information is retained together with the program information and the schedule information is managed separately from it, for example. Only the schedule information is changed by a schedule adjustment.

By managing the original schedule information and the schedule information separately, a program erased on the schedule by a schedule adjustment can be recovered on the schedule by performing a schedule adjustment again. Furthermore, even if program information is erased on the schedule, the program information can be used at the above schedule recovery by retaining the program information instead of deleting it.

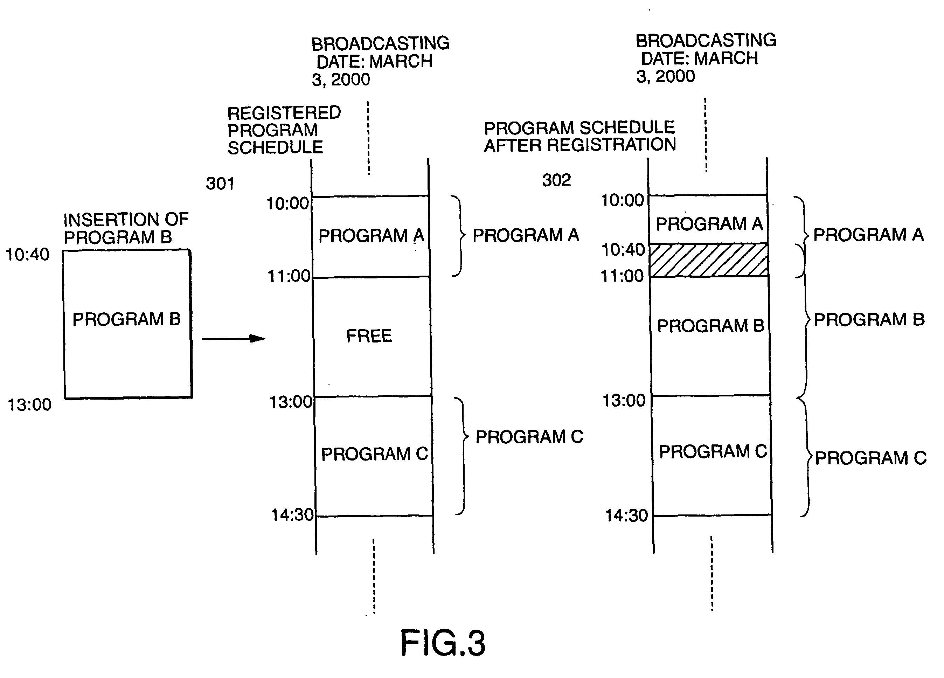

Referring to Fig. 3 to Fig. 10, there are shown examples of the schedule adjustment performed by the schedule adjustment section 102.

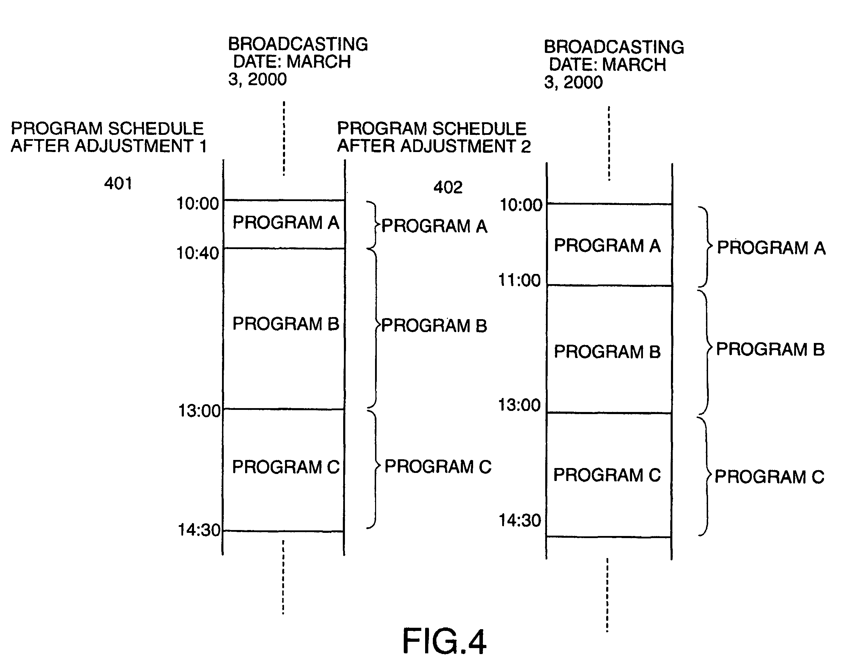

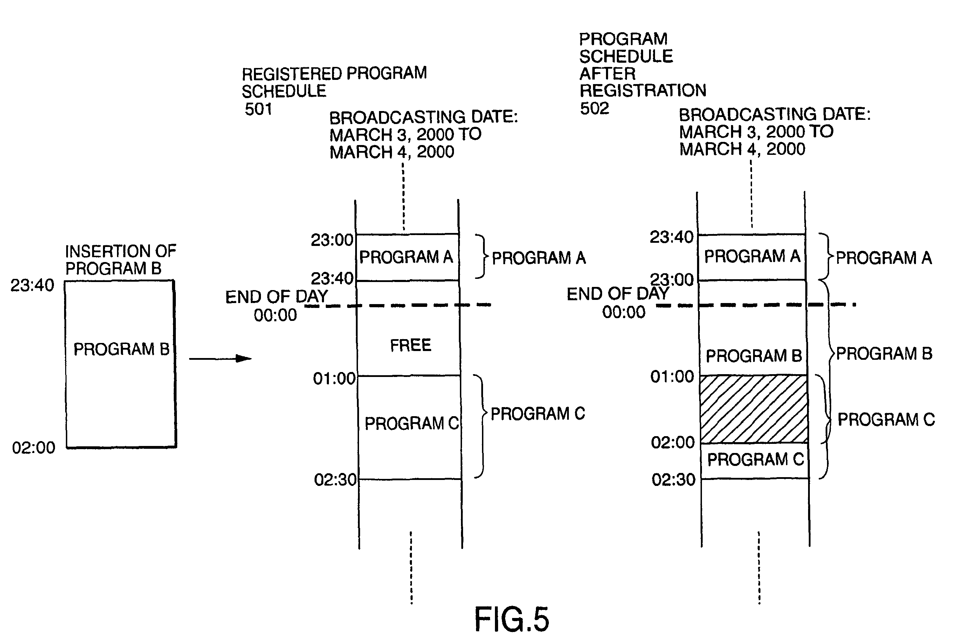

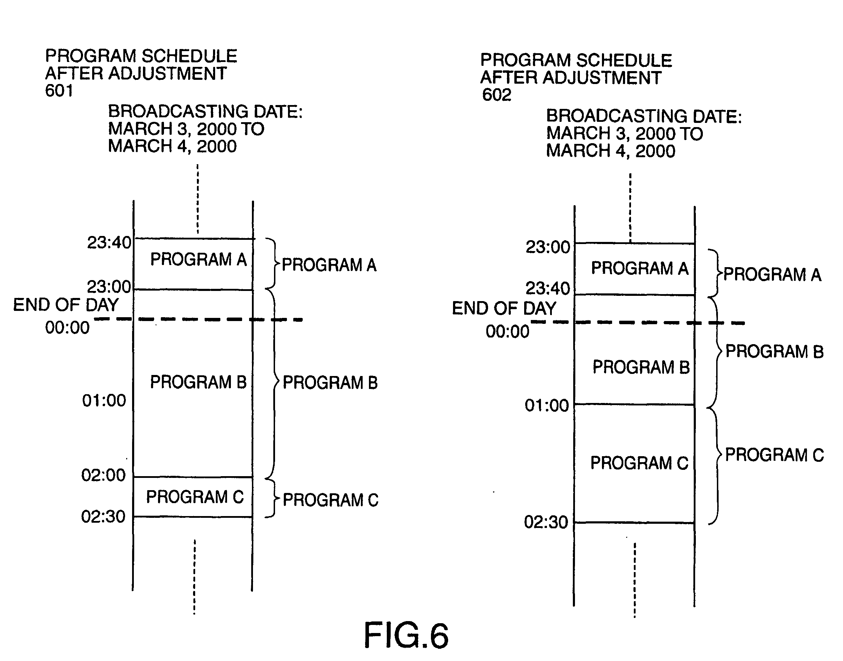

Fig. 3 shows the middle of a new registration process of the program information, assuming that a certain time zone on March 3, 2000 is a program schedule designated by 301. If a program B from 10:40 to 13:00 is inserted into a schedule having a program A from 10:00 to 11:00 on March 3, 2000 as a broadcasting date, no program from 11:00 to 13:00 on the same date, and a program C from 13:00 to 14:30 on the same date, the program A overlaps with the program B by 20 minutes from 10:40 to 11:00 on the date (302 in Fig. 3). If "the later program precedent" is preset as an adjustment method at this point, the schedule is adjusted so that the schedule of the program B registered later is precedent. A program schedule after the schedule adjustment is shown in Fig. 4. In "the later program precedent," the schedule of the program A is reduced from the time zone of 10:00 to 11:00 to that of 10:00 to 10:40 as designated by 401. Contrary to this, if "the earlier program precedent" is preset, the earlier registered program is precedent as designated by 402, the schedule of the program B is adjusted from the time zone of 10:40 to 13:00 to that of 11:00 to 13:00. As an adjustment method of a schedule extending over broadcasting days, there is an adjustment method having "the current day precedent" and "the next day precedent." Referring to Fig. 5, there is shown the middle of a new registration process of the program information, assuming that a certain time zone on March 3 to March 4, 2000 is a program schedule designated by 501. If a program B from 23:40 on March 3, 2000 to 02:00 on the next day, March 4 is inserted into a schedule having a program A from 23:00 to 23:40 on March 3, 2000 as a broadcasting date, no program from 00:00 to 01:00 on March 4, 2000, and a program C from 01:00 to 02:30 on March 4, 2000, the program B overlaps with the program C by one hour from 01:00 to 02:00 on March 4, 2000 (502). If "the current day precedent" is preset as an adjustment method at this point, the schedule is adjusted so that the schedule of the program B whose start time is on the current day is precedent. In other words, as shown at 601 in Fig. 6, the schedule of the program C is reduced from a time zone of 01:00 to 02:30 to that of 02:00 to 02:30. Contrary to this, if "the next day precedent" is preset, the program whose start time is on the next day is precedent as designated by 602, the schedule of the program B is adjusted from the time zone of 23:40 on March 3 to 02:00 on March 4 to that of 23:40 on March 3 to 01:00 on March 4.

This always enables a schedule adjustment at input of program information having any schedule, thereby preventing an interruption of a generation or a transmission as an error. In addition, even if the schedule information is adjusted by the above schedule adjustment for the program information, the schedule adjustment of the program information is canceled or the schedule is readjusted by executing change operations of the program information several times.

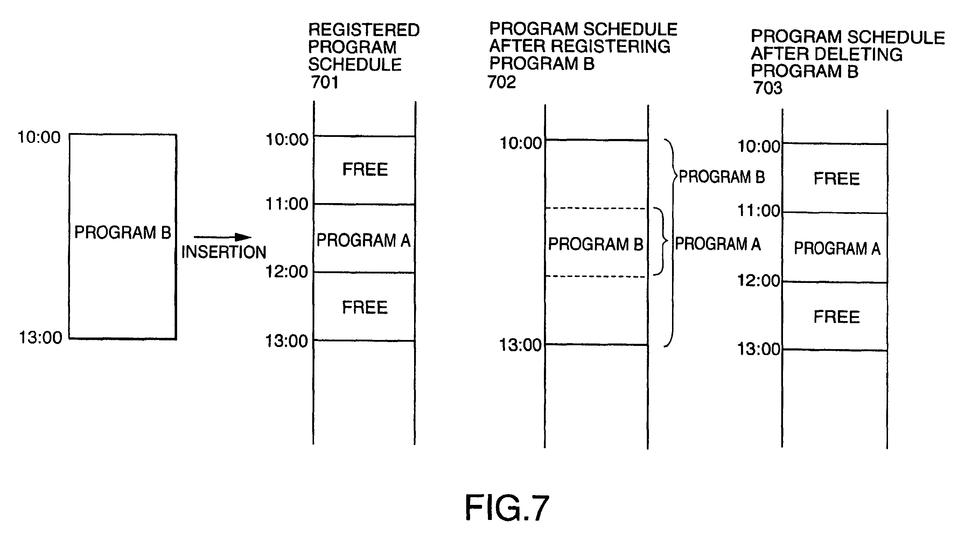

This will be described below by using Fig. 7. It is assumed that the program schedule designated by 701 is in the middle of a new registration process of the program information. If a program B from 10:00 to 13:00 is inserted into a schedule having no program from 10:00 to 11:00 on a broadcasting date, a program A from 11:00 to 12:00, and no program 12:00 to 13:00, the program A completely overlaps with the program B (702). If "the later program precedent" is preset as an adjustment method at this point, the schedule is adjusted so that the schedule of the program B is precedent, by which the program B is set from 10:00 to 13:00 and the program A is set to 11:00 to 11:00 by a schedule adjustment. In other words, the program A is completely erased as a broadcasting program from appearance. The schedule adjustment section 102, however, retains information as information of a zero broadcasting time as schedule information of the program A instead of deleting the program A.

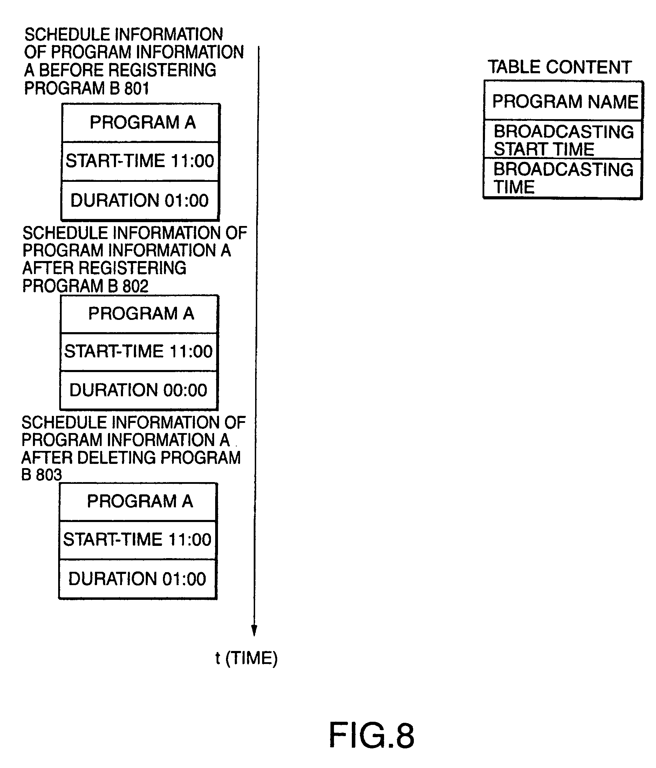

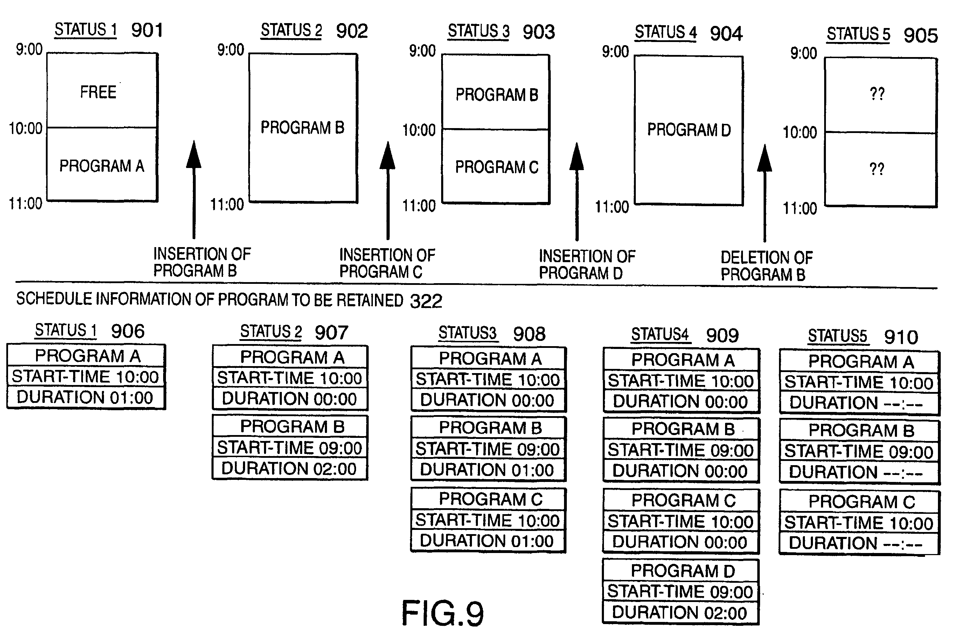

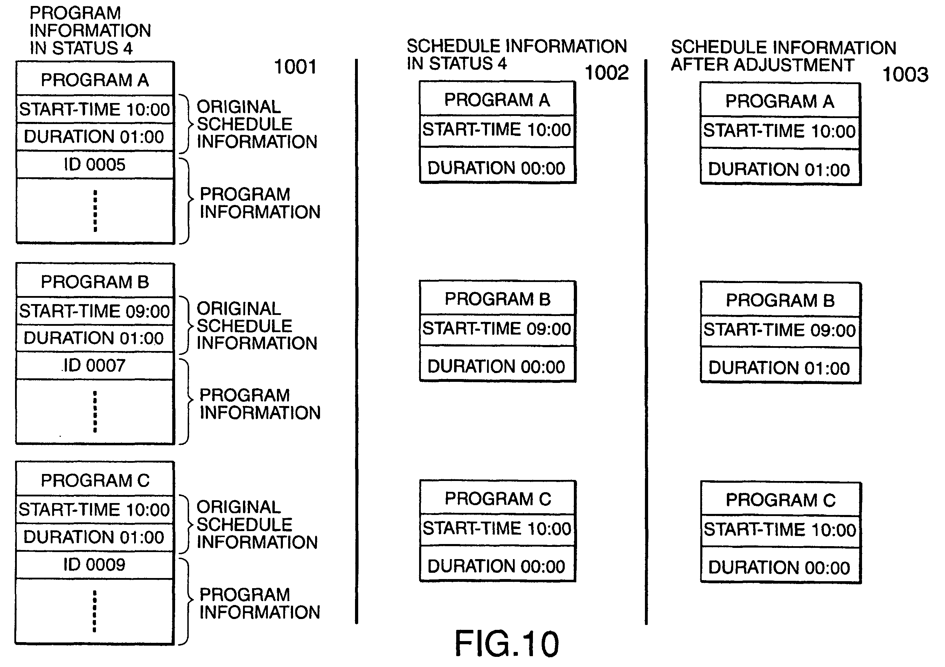

Referring to Fig. 8, there is shown schedule information of the program A fetched from the program information DB section 104 by the schedule adjustment section 102. Reference numeral 801 designates schedule information before the registration of the program information B and reference numeral 802 designates schedule information after the registration. The schedule information comprises a broadcasting start time and time duration for broadcasting. For example, in this case, time duration for broadcasting is one hour before the registration of the program B (801), while it is zero hour after the registration of the program B (802). If the program B is deleted in this condition, the program time of the schedule information of the program A recovers the original one (703, 803). The original information is used to change the time for a program in the program schedule information by referring to the original schedule information in the program information managed separately from the schedule information. When an attempt is made to adjust program schedule information whose program time becomes once zero as a result of repeating a change several times, there is a possibility of an occurrence of a program which cannot be determined by settings of "the later program precedent" and "the earlier program precedent." Another adjustment method need be prepared for this case. As a method of determining a priority independently of an input order, there are a broadcasting start time, a length of a broadcasting time, and a program ID, for example. Assuming a priority of 1) a program whose broadcasting start time is later, 2) a program whose broadcasting time is long, and 3) a program having a smaller program ID, an adjustment condition will be described by using Fig. 9 and Fig. 10.

Referring to Fig. 9, there is shown an illustration of a schedule image of a broadcasting program for program information inputted together with a time process. When program information in a condition as designated by 901 is registered (906 for schedule information retained by the schedule adjustment section 102), an input of a program B causes the broadcasting time duration of a program A to be adjusted as designated by 902 conforming to the rule of "the later program precedent" so as to be zero (schedule information 907). Subsequently, an input of a program C causes the broadcasting time duration of the program B to be adjusted as designated by 903 conforming to the rule so as to be one hour) (schedule information 908). Then, an input of a program D causes the broadcasting time duration of the program B and that of the program C as designated by 904 conforming to the rule so as to be zero schedule information 909). Next, a deletion of the program D recovers the broadcasting time duration of the program information submitted to the schedule adjustment (905). Condition 5 will be described below focusing on a result of a schedule adjustment. Referring to Fig. 10, there is shown schedule information retained by the schedule adjustment section 102 corresponding to Fig. 9. If a schedule is recovered from the original schedule information (1001, 1002 for schedule information in condition 4) retained together with the program information regarding the program A, the program B, and the program C whose schedule is adjusted between 01:00 to 11:00, the schedule of the program A is completely the same as that of the program C, thereby causing an overlap between their schedules and the schedule of the program B. If an adjustment is performed based on the predetermined priority at this point,"1) the program whose broadcasting start time is later" is precedent, first. In this example, the program A and the program C are to be adjusted, first. The program A and the program C cannot be adjusted by 1), and therefore an attempt is made to adjust them by the condition 2). They cannot be adjusted by the condition, either, due to the same broadcasting time. Therefore, the condition 3) is applied. A program ID is unique to each program and therefore there is no duplicate program ID. Accordingly, the program A having a smaller ID is precedent to the program C, thereby resulting in one hour for the broadcasting time duration of the program A and zero hour for the broadcasting time duration of the program C as it is. Next, an adjustment between the program A and the program B will be described. The program A is precedent due to the condition 1) and therefore the broadcasting time duration of the program B is adjusted to one hour. The schedule information after this adjustment is shown at 1003.

This enables a complete recovery adjustment of the program schedule on the basis of the predetermined adjustment priority even for a program whose broadcasting time duration becomes zero once due to a schedule adjustment. For the program information after the schedule adjustment, the control shifts to the band adjustment section 103, next. In the band adjustment section 103, a transmission data amount changed with a registration or an alteration of the program information is calculated. If it exceeds the limit, an information cut is made for the program information by the excess amount. At a termination of a registration process after a frame adjustment, the band adjustment section 103 calculates a program control information amount. This calculation is performed within a range of a transmission of the program information in a schedule range of the program information registered or altered anew. For example, if the current date is December 1 and the SI listed period is 8 days, in the schedule range of the inputted program information set to December 3 to December 5, the calculation range is a period for a transmission of the program control information for December 3 to December 5 and thus the period is November 26 (December 3 is included as information for the eighth day) to December 5 (December 5 is included as information for the first day).

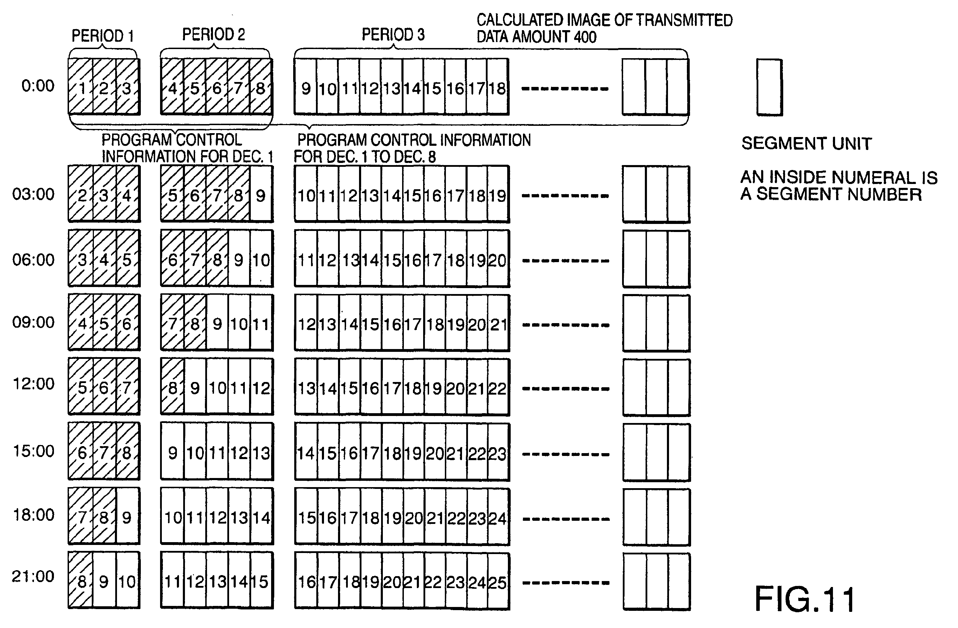

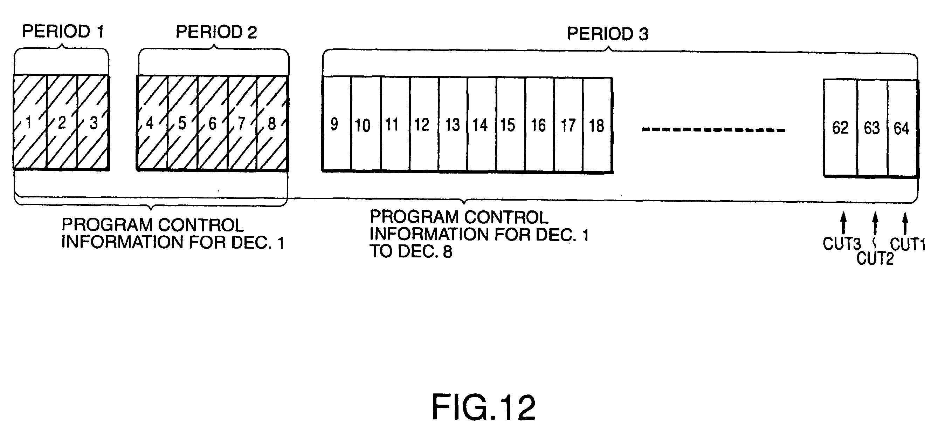

However, the current day is December 1 and therefore the transmission information amount of November 26 to December 2 can be omitted. Therefore, the calculation is intended for the program information transmitted between December 1 to December 5. If the program information is event information (EIT), the all-station SI listed period is 8 days, and the each-station SI listed period is 32 days, the all-station sch-EIT transmitted on December 1 is used for December 1 to December 8 and each-station sch-EIT is for December 1 to January 1. In the same manner, the all-station sch-EIT transmitted on December 2 is for December 2 to December 9 and each-station sch-EIT is for December 2 to January 2, while the all-station sch-EIT transmitted on December 5 is for December 5 to December 12 and each-station sch-EIT is for December 5 to January 5. In other words, as for the EIT information transmitted within a calculation range of December 1 to December 5, the all-station sch-EIT is for December 1 to December 12 and each-station sch-EIT is for December 1 to January 5. A transmission data amount for the all-station sch-EIT is calculated, first. In this embodiment, a segment unit is used here as a calculation unit, for example. For transmission periods, some period patterns are preset according to a relative time from the current time. For example, it is assumed that a time period of the nearest 9 hours from the current time is period 1 (three segments), a time period from the 10th hour to the 24th hour is period 2 (five segments), and the subsequent time period until the eighth day is period 3 (56 segments). Accordingly, the program information for a day fits into eight segments and therefore the all-station sch-EIT transmitted for a single day is divided into eight patterns in total. Therefore, a data amount of eight patterns per day need be estimated to check that the maximum value is within the band. Referring to Fig. 11, there is shown an illustration of a calculation image of the all-station sch-EIT information amount for December 1. Shaded portions are the program control information for December 1. The calculation is made in units of a segment and therefore transmission information amounts are calculated in eight patterns per day delimited by 0:00, 03:00, 06:00, 09:00, 12:00, 15:00, 18:00, and 21:00 and it is determined whether they fit into a predetermined band by calculating a bit rate. Assuming that d1, d2, and after are information amounts corresponding to segment numbers 1, 2, and after, a transmission bit rate at 00:00 is calculated by (d1+d2+d3)/period 1 + (d4+d5+d6+d7+d8)/period 2 + (d9+d10+d11+ --- +d64)/period 3. In the same manner, the transmission bit rate at 03:00 is calculated by (d2+d3+d4)/period 1 + (d5+d6+d7+d8+d9)/period 2 + (d10+d11+d12+ --- +d64)/period 3. The bit rates are calculated for eight patterns per day. If a band over occurs as a comparison with a preset transmission bit rate, an information cut is made until the maximum bit rate in the eight patterns is within the band. The information cutting method is shown in Fig. 12. Information to be cut is assumed to be preset such as a program description of a short-format event descriptor or information to be cut on an operation, for example. In addition, it is assumed that the information can be changed with settings.

This enables a change on an operation or original settings for each media type or for each service, thereby increasing a degree of freedom. The information cut is started sequentially from the last segment of the all-station SI listed period (cut 1, cut 2, ---) and terminated when the information fits into the band. While the information cut started from the last segment is described in this embodiment, it is possible to use a cutting method reflecting an intention of a user by settings such as, for example, a method in which cutting is started from a segment having the maximum amount of information. Next, a calculation is made to obtain a transmission information amount of a local broadcasting station (referred to as a local-station transmission information amount) to be transmitted to TS used by the local broadcasting station. Local-station bands are calculated by summing up bands used for p/f-EIT, all-station sch-EIT, and each-station sch-EIT. The sum total is used for a band check. A transmission bit rate for each-station sch-EIT is calculated in the same method regarding eight patterns shifted by segments. Although a description of a calculation of the p/f-EIT transmission bit rate is omitted, if it causes a band over, an information cut operation is performed until the maximum bit rate in the eight patterns is put within the band. Information to be cut is assumed to be preset such as an extended format event descriptor or information to be cut on an operation, for example. In addition, it is assumed that the information can be changed with settings.

This enables a change on an operation or original settings for each media type or for each service, thereby increasing a degree of freedom.

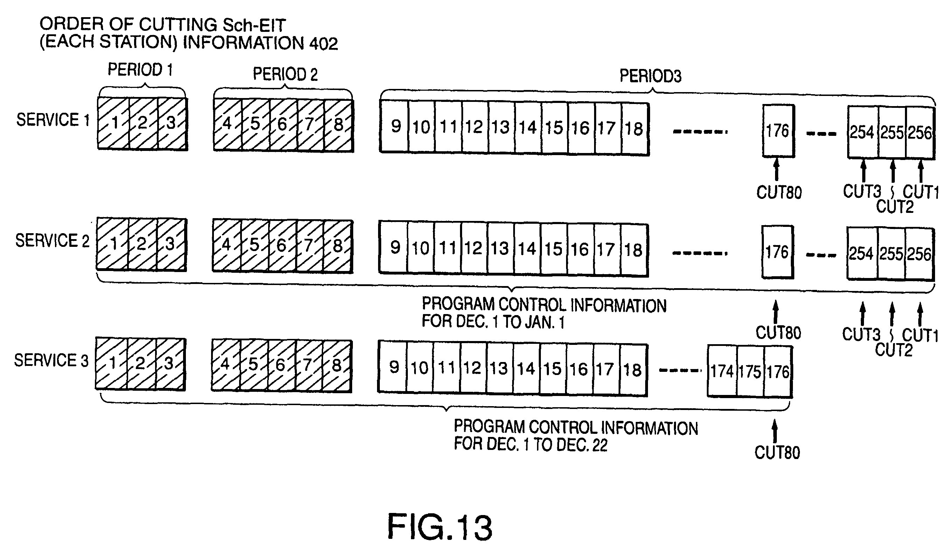

Referring to Fig. 13, there are shown information cut conditions. The information cut is started sequentially from the last segment of each-station sch-EIT (cut 1, cut 2, ---) and terminated when the information fits into the band. While the information cut started from the last segment is described in this embodiment, it is possible to use a cutting method reflecting an intention of a user by settings such as, for example, a method in which cutting is started from a segment having the maximum amount of information. If there are a plurality of services for a single TS, the information cut is started from program information of a service having the longest each-station SI listed period. Its condition is shown at 402. As data transmitted on December 1, there is shown an example of sch-EIT information for 32 days of the each-station SI listed period from December 1 to January 1 for service 1 and for service 2 and sch-EIT information for 22 days of the each-station SI listed period from December 1 to December 22. In this case, the each-station SI listed periods for the service 1 and the service 2 are relatively longer and therefore the information cut is started sequentially from the last segment of the service 1 and that of the service 2 (cut 1, cut 2, and cut 3, ---) without any information cut for the service 3. If the information does not fit into the band by the information cut for the service 1 and for the service 2 from December 22 to January 1, the information cut is started sequentially from the last segment on December 22 (segment number 176) included in the service 1, the service 2, and the service 3 (cut 80, ---) and terminated when the information fits into the band. While the above EIT calculation is for December 1, in the example of the above schedule range (December 3 to December 5), a calculation and a band adjustment is performed for a period from December 1 to December 12 regarding the all-station sch-EIT information and for a period from December 1 to January 5 regarding the local-station EIT information. This enables the program control information to fit into the band without any period adjustment. In addition, the information cut is started from the end of the listed days at a band adjustment, thereby suppressing an effect of the information cut from viewers' viewpoint.

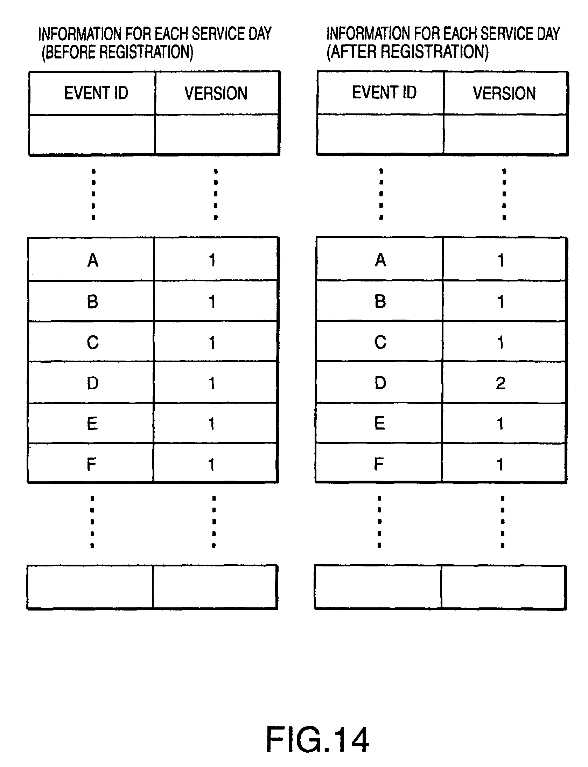

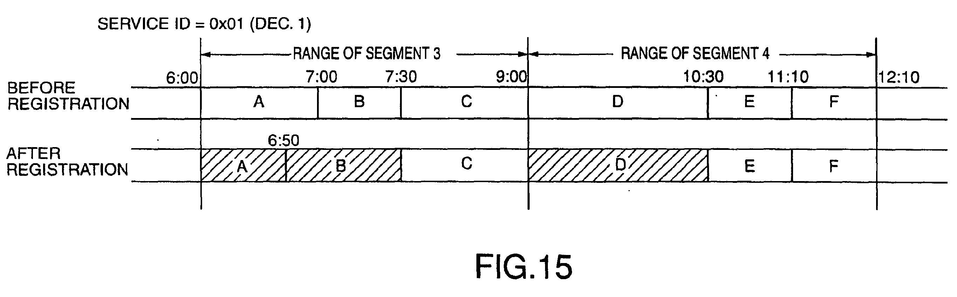

If the band adjustment terminates, the program information is stored in the program information DB 104. When it is stored in the program information DB, the program information DB generates and stores as storage information a list of versions corresponding to all included event IDs for each service day for event information (Fig. 14). The version is incremented when event information is changed. Even if the schedule information is changed, the version is not updated. Version 1 is applied to the first registration. In the above process, the program information is put in a transmittable condition and registered on the program control information generator, thereby causing a reduction of a load such as a check or an adjustment at sectioning. The input section 101 checks the inputted program information as set forth in the above, determines a timing for generating or transmitting section data (program control information) based on the program information, and notifies the difference detecting section 105 of a result of the determination. This determination is made based on whether the inputted program information is within a range of the currently transmitted program information; if it is within the transmission range, an instruction is made to generate section data immediately. This section data generation and transmission instruction includes information of which range of data should be generated and transmitted; for example, there are data range specification units such as a service unit, a service/day unit, and a service event unit. When receiving a section data generation and transmission instruction from the input section 101, the difference detecting section 105 performs a process for detecting a difference from the previous generated section data on the basis of the specified data range. Details of this process will be described below. When receiving the section data generation and transmission instruction from the input section 101, the difference detecting section 105 obtains segment information within the registered data range. The segment information is an event identification in a segment and schedule information and a version corresponding to this. The segment information is required since the difference is detected in units of a segment. Segments treated here are managed in units of a service day. For example, a change caused by a registration of event information is shown in Fig. 15. At a change of event information on December 1 with a service ID of 0x01 as a change data range, segment information within the range is generated anew. The version is set so as to correspond to an event ID based on information for each service day set at the registration. In this example, it is assumed that there are alterations in the program A, the program B, and the program D. While segment information is generated for all segments actually, segment 3 which the program A and the program B belong to and segment 4 which the program C belongs to will be focused on for the following description.

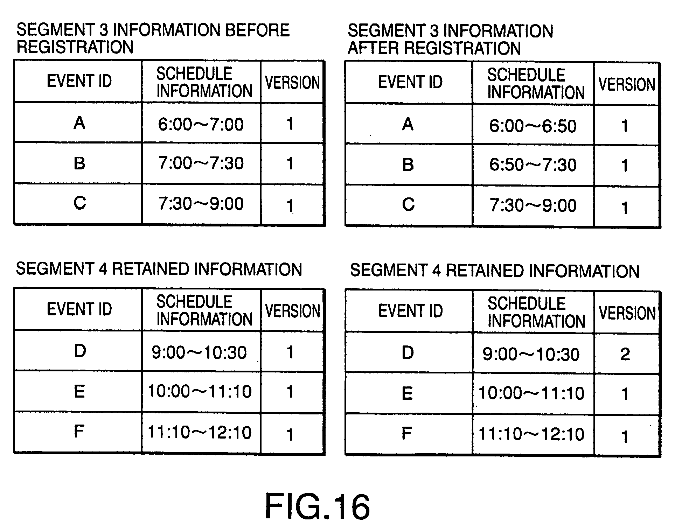

Referring to Fig. 16, there is shown segment information of the segments 3 and 4 before and after the registration. If a difference between the segment information before and after the registration is detected, changes are found such as a change of schedule information for the program A and the program B and a change of a program content for the program D (caused by a version update). This enables a detection of changes of the segments 3 and 4 on December 1 with the service ID of 0x01 and the detected segments are added to the section data generation list. The section generation list, which is used for specifying a segment submitted to a section data generation, has information of service IDs, dates, and segment identifications.

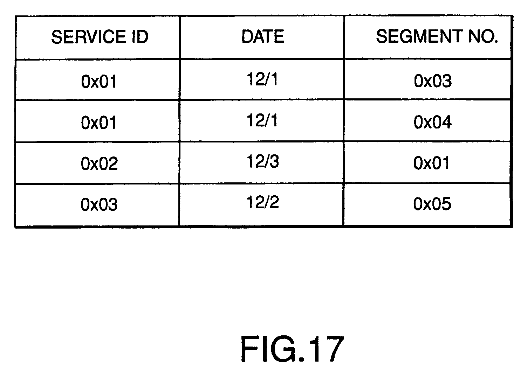

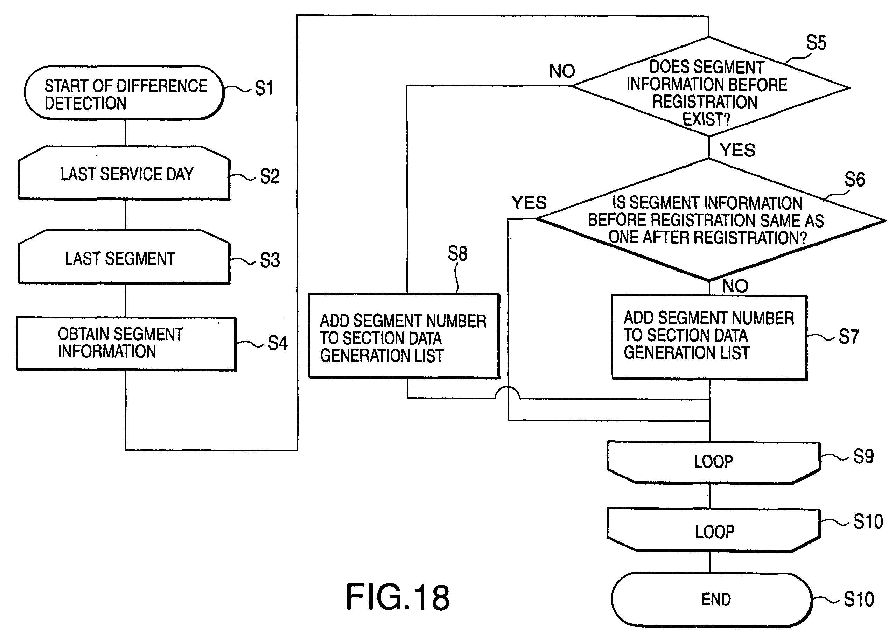

Referring to Fig. 17, there is shown an example of a section data generation list. For example, it is found that "the segment 3 on December 1 with the service ID of 0x01 is regenerated" from the first information on the list. Referring to Fig. 18, there is shown a general flow of the difference detection process. The difference detection process is started (step S1). Based on a data range from the input section 101, loops are made for the data range in units of a service date (step S2). In the loops, further loops are made in units of a segment (step S3). In the loops in the step S3, the processes below are performed. The above segment information is generated, first (step S4). It is determined whether unregistered segment information exists (step S5). Unless it exists, the segment number is added to the section data generation list to generate new section data (step S8). If any unregistered segment information exists, it is checked there is any difference between the segment information before and after the registration (step S6). If there is any difference, the segment number is added to the section data generation list (step S7). If there is no difference, no operation is performed. This makes it possible to extract only the segment information submitted to a section data generation anew. By passing the section data generation list to the section generating section 106, the section data generation process can be suppressed to the minimum.

In addition, this method has a large effect on a high-speed process to changes, which may occur frequently in a few days from the current day. If the number of sections changes due to a change of the last segment on the sub-table, however, for example, if there is any change on a program between the current day and 21:00 to 24:00 on the fourth day, all section data must be regenerated and therefore it is more efficient to apply a method of preventing it. For example, there is a method of arranging all sections for the last segment of the sub-table, putting a null section into a section having no data actually, and always fixing the last section number to 256. With this, the last section number is fixed and only differences are used for the section data generation for all change patterns.

### (Second Embodiment)

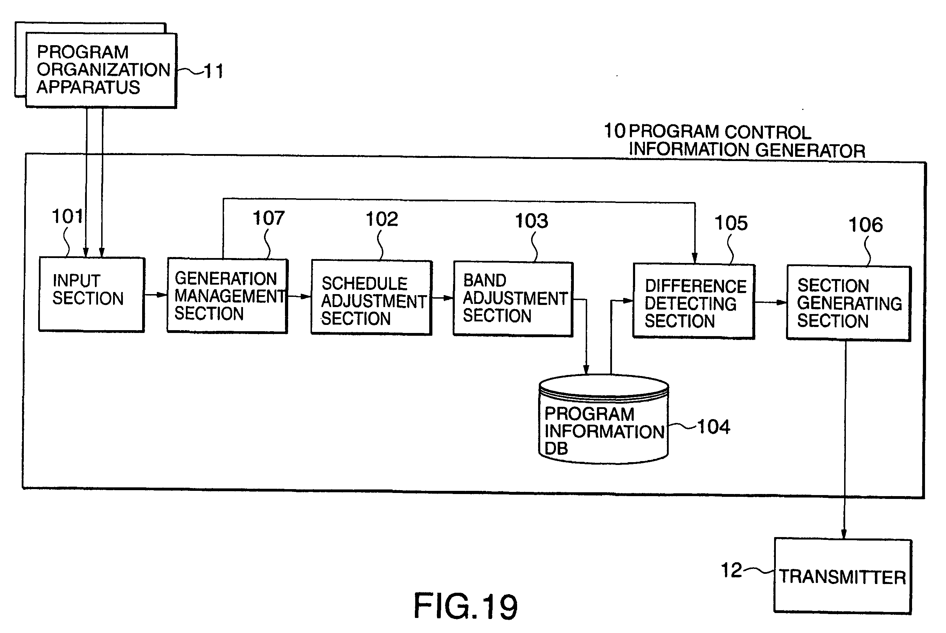

The second embodiment is adapted to the high-speed process on the basis of the first embodiment in the above; it has additionally a generation management function in which, if a section generation instruction is repeated a plurality of number of times, they are collected into one before giving an instruction. Referring to Fig. 19, there is shown a configuration of the second embodiment of a program control information generator according to the present invention. The second embodiment of the program control information generator according to the present invention will be described below.

In Fig. 19, portions designated by the same reference numerals as for the first embodiment will be described only in additional contents. Reference numeral 101 in Fig. 19 designates an input section for receiving inputs of program information from a plurality of program organization apparatuses or input terminals or of schedule information. A generation management section 107 receives program information required for generating section data from the input section 101 and section generation instructions and then collects a plurality of section generation instructions into one.

Next, the operations will be described below. The description is limited to the functional operations added anew in the second embodiment in comparison with the first embodiment.

In the BS digital broadcasting started in 2000, there are a plurality of broadcasting forms such as a television, radio, and data broadcasts. A program organization apparatus may be installed for each broadcasting form, functioning independently. In addition, a plurality of input terminals are scheduled to be installed so as to cope with urgent program changes in case of a live broadcast program or urgent news. These inputs are performed independently and in parallel to the program control information generator and therefore the input section 101 additionally has a function of accepting a plurality of inputs at a time.

With this, the input section 101 may issue section generation instructions continuously in response to continuously inputted program information. Therefore, in the configuration described in the first embodiment, continuous section generation instructions may be inputted into the difference detecting section 105. The difference detecting section 105 executes a one-to-one process for a section generation instruction, by which the same section data may be generated repeatedly in some cases, thus increasing a load on a section generation. To resolve this problem, the section generation is performed at a high speed by inserting a generation management section 107 having a function of collecting section generation instructions of a plurality of number of times issued by the input section 101.

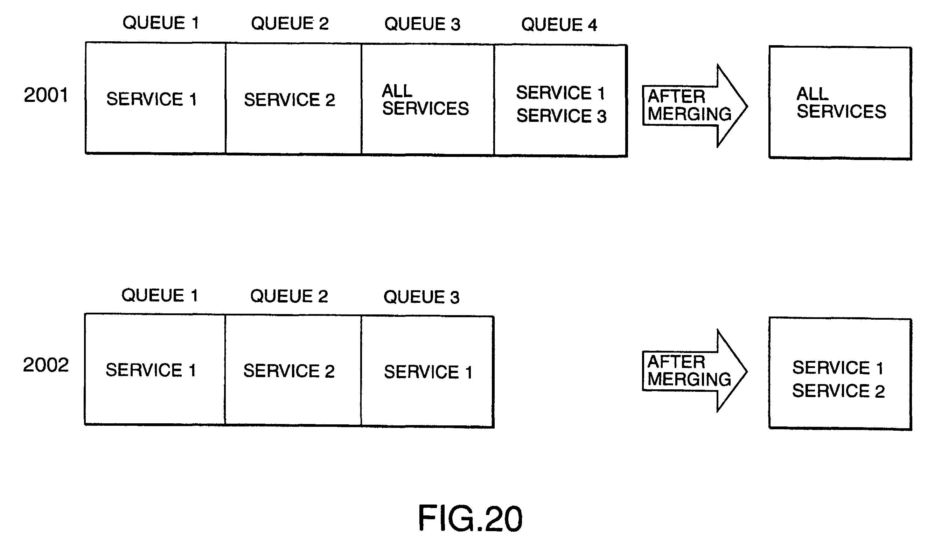

Referring to Fig. 20, there is shown a collecting method 1. It is an example that the input section 101 instructs a section generation in units of a service. At 2001, there is shown a collecting method for an input of four consecutive section generation instructions. In this example, a queue includes all services for specifying section generations of all services and therefore other section generation instructions are absorbed and only one section generation instruction for specifying all services is transmitted to the difference detecting section 105. At 2002, two section generation instructions for specifying service 1 in a queue are put together and a section generation instruction for specifying service 1 and service 2 is transmitted to the difference detecting section 106.

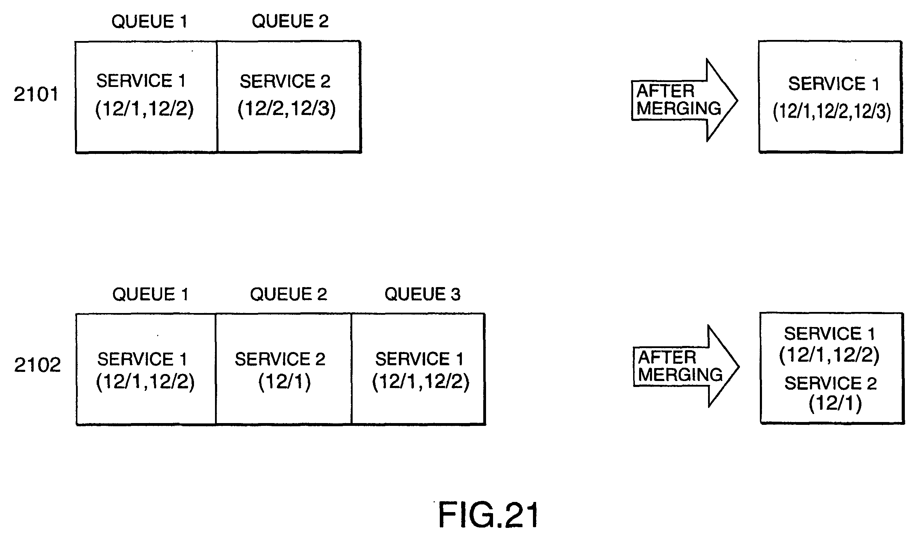

Referring to Fig. 21, there is shown a collecting method 2. It is an example that the input section 101 instructs a section generation in units of a service date. At 2101, there is shown a collecting method for an input of two consecutive section generation instructions. In this case, the same service is put in queue 1 and queue 2 with December 2 specified in both. They are put together and a single section generation instruction for specifying the service 1 (December 1, December 2, and December 3) is transmitted to the difference detecting section 105. At 2102, there is shown a collecting method for an input of three consecutive section generation instructions. Quite the same content is specified in queue 1 and queue 3. Therefore, it is absorbed and then only a single section generation instruction for specifying service 1 (December 1, December 2) and service 2 (December 1) is transmitted to the difference detecting section 105. This enables a section generation only in the minimum required range.

### (Third embodiment)

A program control information generator according to a third embodiment is capable of generating and transmitting program control information more pressing relative to the program control information generator according to the second embodiment, by branching processes according to a priority of section generation instructions.

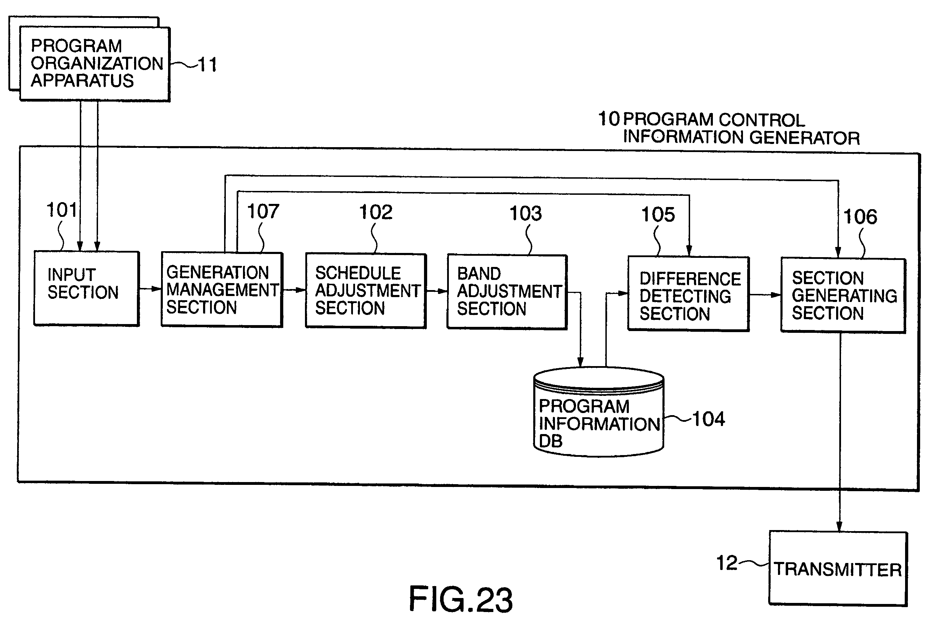

Referring to Fig. 23, there is shown a block diagram of a configuration of the third embodiment of the program control information generator according to the present invention. The third embodiment of the program control information generator according to the present invention will be described below.

In Fig. 23, portions designated by the same reference numerals as for the above will be described only in additional contents.

A generation management section 107 in Fig. 23 receives a section generation instruction from an input section 101 and performs processes according to a priority of the section generation instruction. For example, an operation is considered below assuming that there are three types of section generation instructions having priority A, priority B, and priority C (Priority: Priority A > Priority B > Priority C).

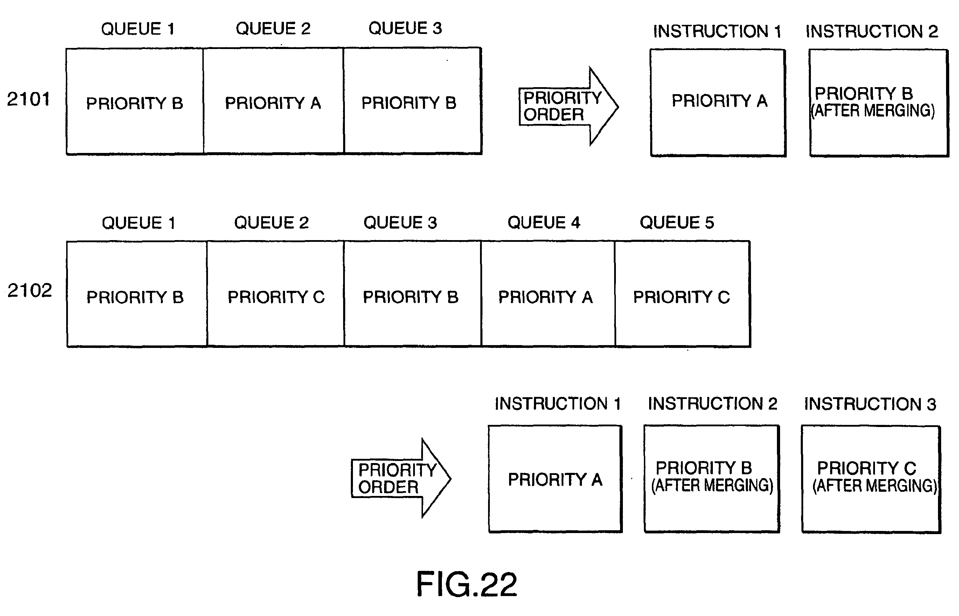

Referring to Fig. 22, there is shown a priority processing method. At 2201, there is shown a processing method for an input of three consecutive section generation instructions having different priorities. At a continuous input of the priority B for queue 1 and queue 3 and the priority A for queue 2, the priority A is higher to perform a process preferentially and therefore a section generation instruction having the priority A is issued first and then there is issued a single section generation instruction having the priority B of other instructions collected into one. If the section generation instruction having the priority A is used due to an urgent change of program information, for example, if a change occurs in program information currently under broadcasting, assuming that the change is limited to pf-EIT requiring a faster change, collected section generation instructions having the priority A are inputted into the section generation section 106. At 2202, there is shown a processing method for five consecutive section generation instructions having different priorities. In this case, the same process is performed as for 2201; first, a section generation instruction having the priority A, next a single collected section generation instruction having the priority B, and finally a single collected section generation instruction having the priority C are transmitted to the difference detecting section 105. The priority setting of the section generation instructions enables more pressing section generation and transmission as set forth in the above.

### INDUSTRIAL APPLICABILITY

According to the present invention as described above, there is provided a program control information generator for a broadcasting station system for generating and transmitting program control information from program information and schedule information, characterized by an input section for accepting inputs of the program information or the schedule information from a program organization apparatus, a band adjustment section for adjusting a program control information amount with a band over, and a storage section for storing the program information, thereby having an effect of enabling a check of the program control information before generating a section and a reduction of a time for generating the section.

The program control information generator of the present invention is provided with a schedule adjustment section capable of setting a plurality of adjustment methods, thereby having an effect of enabling an adjustment method to be optionally changed, thus facilitating a countermeasure for an operational change.

In the program control information generator of the present invention, the schedule adjustment section has a function of performing a schedule adjustment by preferentially setting program information for the day or the next day to an adjustment method, thereby having an effect that, if there is a schedule overlap between an already registered program and a new registered program, a schedule adjustment conforming to the setting is performed without interrupting the generation due to an error occurrence, by which the program control information can be generated and transmitted continuously.

In the program control information generator of the present invention, the schedule adjustment section has a function of performing a schedule adjustment by preferentially setting an earlier registered program or a later registered program, thereby having an effect that, if there is a schedule overlap between an already registered program and a new registered program, a schedule adjustment conforming to the setting is performed without interrupting the generation due to an error occurrence, by which program control information can be generated and transmitted continuously.

In the program control information generator of the present invention, the schedule adjustment section can resume a pre-adjustment schedule when it has changed schedule information preceding or following a schedule adjusted once, thereby having an effect of enabling a recovery of a schedule in a small number of steps in the program adjusted once.

In the program control information generator of the present invention, the schedule adjustment section has a function of previously setting priorities to a plurality of adjustment methods, thereby having an effect of facilitating a schedule adjustment between programs submitted to a schedule adjustment once.

In the program control information generator of the present invention, the storage section retains original schedule information inputted from the program organization apparatus and schedule information after the schedule adjustment, thereby having an effect of enabling the schedule adjustment in any case.

In the program control information generator of the present invention, the storage section retains program information erased on the schedule as a result of the schedule adjustment made by the schedule adjustment section, thereby having an effect of enabling a recovery of the program information erased on the program schedule to the program schedule by re-executing a schedule adjustment.

In the program control information,generator of the present invention, the input section checks the program information completely at an input, having an error detecting function, and determines a timing for generating and transmitting section data from the program information, thereby having an effect of preventing an interruption of broadcasting which may be caused by an error occurrence at generating a section when a time lag may be caused by an input of the program information.

In the program control information generator of the present invention, if section data to be transmitted exceeds the transmission band, the band adjustment section cuts program information so as to fit into the band, thereby having an effect of enabling the program control information to fit into the band without a period adjustment.

In the program control information generator of the present invention, the band adjustment section is capable of changing an adjustment method by settings at the band adjustment, thereby having an effect of enabling an optional change of the adjustment method, thus facilitating a countermeasure for an operational change.

In accordance with another aspect of the present invention, there is provided a program control information generator for a broadcasting station system for generating and transmitting program control information from program information and schedule information, characterized by a difference detecting section for detecting and generating section data including only a difference from the previous generated section at a section generation when section data is generated from program information and program schedule information inputted from a program organization apparatus, thereby having an effect of enabling a high-speed section generating process.

The program control information generator for the broadcasting station system has a storage section for storing the program information and a section generating section for sectioning by acquiring differential data from the storage section, thereby having an effect of enabling a registration process of the inputted program control information and a high-speed section generating process.

In accordance with still another aspect of the present invention, there is provided a program control information generator for a broadcasting station system for generating and transmitting program control information from program information and schedule information, characterized by a generation management section for collectively generating and outputting an information group which has been inputted in a plurality of pieces by the plural number of times when section data is generated from the program information and program schedule information inputted from a program organization apparatus, thereby having an effect of enabling speedup of the entire apparatus by the minimum section generating process.

The program control information generator for the broadcasting station system of the present invention comprises an input section for accepting inputs of the program information or the schedule information from the program organization apparatus and a section generating section for sectioning in response to an instruction of a section generation from the generation management section, thereby having an effect of enabling speedup of the entire apparatus by the minimum section generating process.

In the program control information generator of the present invention, the generation management section decides a priority order for the inputted information group and determines a generation or output order according to the priority order, thereby having an effect of enabling an earlier start of the section generation, by which a change of program control information of urgency can be reflected more quickly.

## Claims

1. A program control information generator for a broadcasting station system for generating and transmitting program control information from program information and schedule information, **characterized by** an input section for accepting inputs of the program information or the schedule information from a program organization apparatus, a band adjustment section for adjusting a program control information amount with a band over, and a storage section for storing said program information.

2. The program control information generator according to claim 1, **characterized by** a schedule adjustment section capable of setting a plurality of adjustment methods.

3. The program control information generator according to claim 2, **characterized in that** said schedule adjustment section adjusts a schedule by preferentially setting program information for the day or the next day to an adjustment method.

4. The program control information generator according to claim 2, **characterized in that** said schedule adjustment section adjusts a schedule by preferentially setting an earlier registered program or a later registered program.

5. The program control information generator according to claim 2, **characterized in that** said schedule adjustment section can resume a pre-adjustment schedule when it has changed schedule information preceding or following a schedule adjusted once.

6. The program control information generator according to claim 5, **characterized in that** said schedule adjustment section can previously set priorities to a plurality of adjustment methods.

7. The program control information generator according to claim 2, **characterized in that** said storage section retains original schedule information inputted from the program organization apparatus and schedule information after the schedule adjustment.

8. The program control information generator according to claim 2, **characterized in that** said storage section retains program information erased on the schedule as a result of the schedule adjustment made by the schedule adjustment section.

9. The program control information generator according to claim 2, **characterized in that** said input section checks the program information completely at an input, having an error detecting function, and determines a timing for generating and transmitting section data from the program information.

10. The program control information generator according to claim 2, **characterized in that**, if section data to be transmitted exceeds the transmission band, said band adjustment section cuts program information so as to fit into the band.

11. The program control information generator according to claim 10, **characterized in that** said band adjustment section is capable of changing an adjustment method by settings at the band adjustment.

12. A program control information generator for a broadcasting station system for generating and transmitting program control information from program information and schedule information, **characterized by** a difference detecting section for detecting and generating section data including only a difference from the previous generated section at a section generation when section data is generated from program information and program schedule information inputted from a program organization apparatus.

13. The program control information generator according to claim 12, **characterized by** a storage section for storing the program information and a section generating section for sectioning by acquiring differential data from the storage section.

14. A program control information generator for a broadcasting station system for generating arid transmitting program control information from program information and schedule information, **characterized by** a generation management section for collectively generating and outputting an information group which has been inputted in a plurality of pieces by the plural number of times when section data is generated from the program information and program schedule information inputted from a program organization apparatus.

15. The program control information generator according to claim 14, **characterized by** an input section for accepting inputs of the program information or the schedule information from the program organization apparatus and a section generating section for sectioning in response to an instruction of a section generation from said generation management section.

16. The program control information generator according to claim 14, **characterized in that** said generation management section decides a priority order for the inputted information group and determines a generation or output order according to the priority order.
